# FASCICULE DE BREVET EUROPEEN

(11) **EP 4 538 515 B1**
(45) Date de publication et mention de la délivrance du brevet: **02.12.2026**
(21) Numéro de dépôt: 24205612.5
(22) Date de dépôt: 09.10.2024
(51) Int. Cl.: F02C 3/22, F02C 7/22, F02C 7/224, F02C 7/25, F02K 1/82

(54) **ENSEMBLE PROPULSIF POUR AÉRONEF COMPORTANT UN SYSTÈME D'ÉCHANGE THERMIQUE DANS LA TUYÈRE D'ÉJECTION**
ANTRIEBSEINHEIT FÜR EIN FLUGZEUG MIT EINEM WÄRMEAUSTAUSCHSYSTEM IN DER ABGASDÜSE
PROPULSION ASSEMBLY FOR AN AIRCRAFT COMPRISING A SYSTEM FOR HEAT EXCHANGE IN THE EXHAUST NOZZLE

(30) Priorité: 12.10.2023 FR 2310972
(43) Date de publication de la demande: 16.04.2025
(73) Titulaire: Airbus Operations (S.A.S.), 31060 Toulouse Cedex 9 (FR)
(72) Inventeur: VERSEUX, Olivier, 31060 TOULOUSE (FR); DEVASIGAMANI, Nandakumar, 31060 TOULOUSE (FR)
(74) Mandataire: Cabinet Le Guen Maillet

(56) Documents cités:
- EP-A1- 4 116 556
- EP-A1- 4 166 771
- WO-A1-2014/105327
- CN-A- 115 930 637
- US-A- 3 412 560

## Description

### DOMAINE TECHNIQUE

La présente invention concerne un ensemble propulsif pour un aéronef, ledit ensemble propulsif comprenant un système de propulsion comportant une tuyère d'éjection assurant l'éjection des gaz de combustion du système de propulsion et un système d'échange thermique arrangé dans la tuyère d'éjection pour assurer un transfert de calories vers le dihydrogène alimentant le système de propulsion, ainsi qu'un aéronef comportant au moins un tel système de propulsion.

### ÉTAT DE LA TECHNIQUE ANTÉRIEURE

Afin de se déplacer, un aéronef comporte classiquement au moins un ensemble propulsif comprenant un système de propulsion arrangé dans une nacelle et qui peut prendre la forme d'un turboréacteur ou d'un turbopropulseur. Dans chaque cas, le système de propulsion comporte un ensemble rotatif qui entraîne une soufflante ou une hélice. L'ensemble rotatif constitue un noyau du système de propulsion et il comporte de l'avant vers l'arrière une entrée d'air qui permet l'introduction d'air dans une veine du noyau, un compresseur qui comprime l'air ainsi introduit, une chambre de combustion dans laquelle se mélange l'air ainsi comprimé et un carburant, et une turbine qui permet la détente des gaz de combustion et qui génère la rotation qui est transmise à la soufflante ou à l'hélice.

En aval de la turbine, une tuyère d'éjection assure l'éjection des gaz de combustion.

Il est également connu, notamment dans le cas du dihydrogène, que le rendement de la combustion d'un carburant est amélioré si ce carburant est chauffé avant ladite combustion. Il est également connu d'utiliser une partie des gaz de combustion chauds évacués par la tuyère d'éjection pour réchauffer le carburant, comme le montrent les documents WO-A-2014/105327 et EP-A-4 166 771.

### EXPOSÉ DE L'INVENTION

Un objet de la présente invention est de proposer une autre solution pour réchauffer le dihydrogène avant sa combustion en toute sécurité.

À cet effet, est proposé un ensemble propulsif pour un aéronef comportant :
- un système de propulsion comprenant un carénage, un ensemble rotatif comportant une chambre de combustion et logé dans le carénage, une tuyère d'éjection disposée en aval de la chambre de combustion et délimitée par une portion arrière du carénage, dite paroi de tuyère, et assurant l'éjection des gaz de combustion issus de la combustion du dihydrogène dans la chambre de combustion,
- un réservoir de dihydrogène, et
- une canalisation d'apport qui relie le réservoir à la chambre de combustion et qui comporte une première portion qui s'étend entre le réservoir et la paroi de tuyère, une deuxième portion qui s'étend entre la paroi de tuyère et la chambre de combustion, et une pluralité de portions intermédiaires logées à l'intérieur de la tuyère d'éjection, où chacune comporte une première extrémité fluidiquement connectée à la première portion à travers la paroi de tuyère et une deuxième extrémité fluidiquement connectée à la deuxième portion à travers la paroi de tuyère. L'ensemble propulsif est caractérisé en ce que chaque portion intermédiaire s'étend sur un secteur angulaire autour d'un axe longitudinal de la tuyère d'éjection.

Avec un tel arrangement, les calories des gaz de combustion sont transférées au dihydrogène grâce aux portions intermédiaires qui traversent la tuyère.

Avantageusement, il y a plusieurs portions intermédiaires les unes à la suite des autres le long de l'axe longitudinal de la tuyère d'éjection.

Avantageusement, les portions intermédiaires disposées les unes à la suite des autres, sont distantes les unes des autres.

Avantageusement, la canalisation d'apport est une canalisation à double peau avec une peau intérieure délimitant un volume intérieur dans laquelle circule le dihydrogène et une peau extérieure délimitant un volume extérieur.

Avantageusement, le volume extérieur est mis au vide.

Avantageusement, la canalisation d'apport comporte des entretoises fixées entre la peau intérieure et la peau extérieure.

Avantageusement, la surface extérieure de la canalisation d'apport est équipée d'ailettes. L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique vue de côté et en coupe d'un ensemble propulsif selon l'invention,
Fig. 3 est une vue en coupe selon la ligne III-III de la Fig. 2 et
Fig. 4 est une vue en perspective d'un mode de réalisation particulier d'une canalisation d'apport mise en œuvre dans l'invention.

### EXPOSÉ DÉTAILLÉ DE MODES DE RÉALISATION

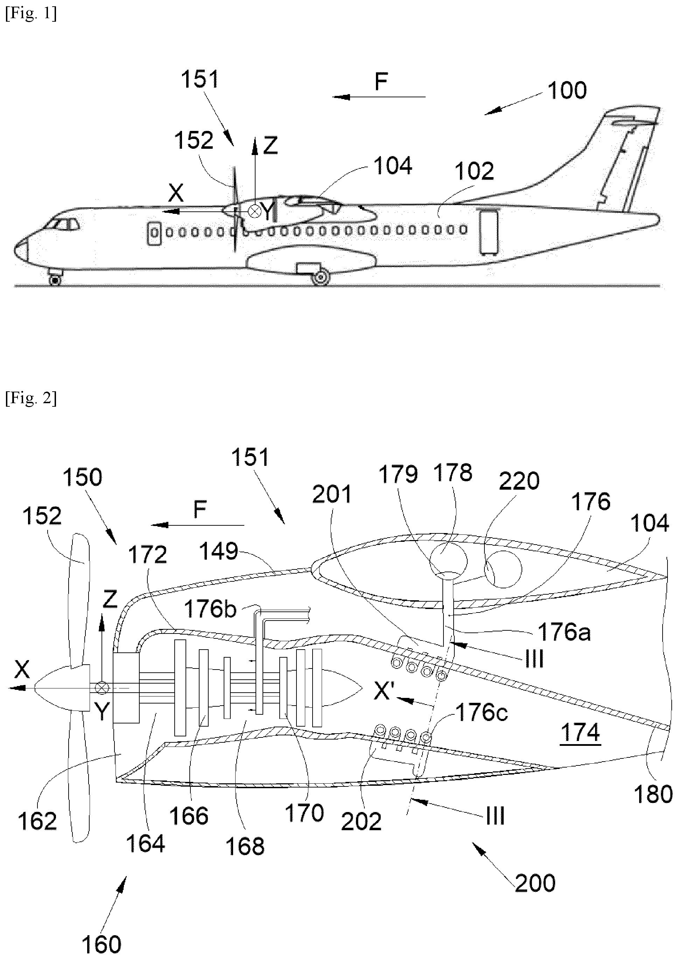

Dans la description qui suit, les termes relatifs à une position sont pris en référence à un aéronef en position d'avancement, c'est-à-dire comme il est représenté sur la Fig. 1, où la flèche F montre la direction d'avancement de l'aéronef.

La Fig. 1 montre un aéronef 100 qui présente un fuselage 102 de part et d'autre duquel est fixée une aile 104. Sous chaque aile 104 est fixé au moins un ensemble propulsif 151.

La Fig. 2 montre l'ensemble propulsif 151 qui comprend une nacelle 149 et un système de propulsion 150 entouré par la nacelle 149. Dans le mode de réalisation de l'invention présenté ici, le système de propulsion 150 prend la forme d'un turbopropulseur avec une hélice 152 entraînée en rotation par un ensemble rotatif monté à l'intérieur d'un carénage 172 du système de propulsion 150 logé à l'intérieur de la nacelle 149, mais le système de propulsion 150 peut également prendre la forme d'un turboréacteur entraînant une soufflante. Ainsi, d'une manière générale, le système de propulsion 150 comporte un ensemble rotatif et un élément mobile 152 (hélice ou soufflante).

Dans la description qui suit, et par convention, on appelle X, l'axe longitudinal du système de propulsion 150 qui correspond à l'axe de rotation de l'élément mobile 152 orienté positivement dans le sens d'avancement de l'aéronef 100, on appelle Y l'axe transversal du système de propulsion 150 qui est horizontal lorsque l'aéronef est au sol, et Z l'axe vertical du système de propulsion 150 ou hauteur verticale lorsque l'aéronef est au sol, ces trois axes X, Y et Z étant orthogonaux entre eux.

La Fig. 2 montre le système de propulsion 150 dans le cas d'un turbopropulseur. Un ensemble rotatif 160 constitue un noyau du système de propulsion 150 et comporte de l'avant vers l'arrière, une entrée d'air 162 qui permet l'introduction d'air dans une veine 164 du noyau, un compresseur 166 qui comprime l'air ainsi introduit, une chambre de combustion 168 dans laquelle l'air ainsi comprimé et du dihydrogène se mélangent et brûlent, et une turbine 170 qui permet la détente des gaz de combustion et qui génère la rotation qui est transmise à l'élément mobile, ici l'hélice 152. Les éléments de l'ensemble rotatif 160 sont entourés par le carénage 172 formé de carters structuraux montés autour des éléments de l'ensemble rotatif 160 et permettent de le rigidifier afin notamment de limiter ses distorsions en fonctionnement.

Le carénage 172 est, d'une part, ouvert à l'avant au niveau de l'entrée d'air 162 et délimite la veine 164 et est, d'autre part, ouvert à l'arrière au niveau d'une tuyère d'éjection 174 qui est en aval de la turbine 170 et donc de la chambre de combustion 168 et assure l'éjection des gaz de combustion issus de la combustion du dihydrogène et de l'air dans la chambre de combustion 168. La partie arrière du carénage 172 qui entoure la tuyère d'éjection 174 forme la paroi de tuyère 180.

L'espace entre la nacelle 149 et le carénage 172 est occupé par divers systèmes permettant d'assurer le fonctionnement du système de propulsion 150. En particulier, afin d'alimenter la chambre de combustion 168 en dihydrogène, l'ensemble propulsif 151 comporte un réservoir de dihydrogène 178 qui est ici logé dans l'aile 104, une canalisation d'apport 176 qui relie le réservoir 178 à la chambre de combustion 168 et une pompe 179 qui met en mouvement le dihydrogène du réservoir 178 jusqu'à la chambre de combustion 168 à travers la canalisation d'apport 176. Sans sortir du cadre de l'invention, le réservoir de dihydrogène 178 peut aussi être logé dans une autre partie de l'aéronef 100, par exemple dans le fuselage 102.

Afin de réchauffer le dihydrogène avant son injection dans la chambre de combustion 168, et ce pour obtenir une meilleure combustion, l'ensemble propulsif 151 comporte également un système d'échangeur thermique 200, qui est arrangé dans la tuyère d'éjection 174 et qui est arrangé, lorsque le système de propulsion 150 est en fonctionnement, pour assurer un échange de calories entre les gaz chauds de combustion circulant dans la tuyère d'éjection 174 et le dihydrogène plus froid circulant dans la canalisation d'apport 176.

La canalisation d'apport 176 comporte une première portion 176a qui s'étend entre le réservoir 178 et la paroi de tuyère 180 et une deuxième portion 176b qui s'étend entre la paroi de tuyère 180 et la chambre de combustion 168.

Pour assurer le réchauffement du dihydrogène circulant dans la canalisation d'apport 176, celle-ci comporte également une pluralité de portions intermédiaires 176c qui sont logées à l'intérieur de la tuyère d'éjection 174 c'est-à-dire à l'intérieur du volume délimité par la paroi de tuyère 180.

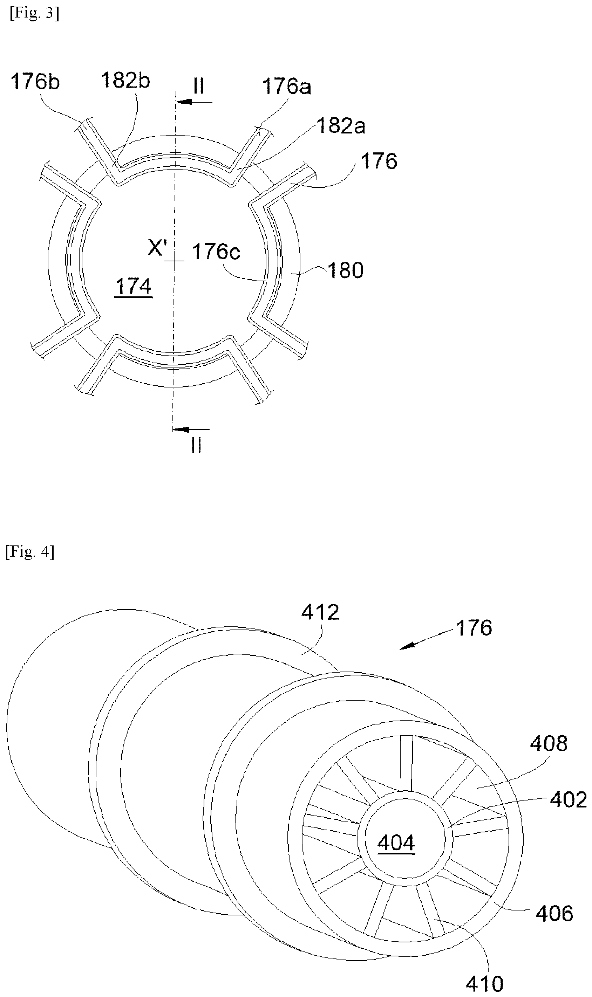

La Fig. 3 montre une coupe de la tuyère d'éjection 174 au niveau de plusieurs portions intermédiaires 176c. Chaque portion intermédiaire 176c comporte une première extrémité 182a fluidiquement connectée à la première portion 176a à travers la paroi de tuyère 180 et une deuxième extrémité 182b fluidiquement connectée à la deuxième portion 176b à travers la paroi de tuyère 180. Les portions intermédiaires 176c sont ainsi logées dans la tuyère d'éjection 174 et baignent ainsi dans les gaz de combustion et ainsi le dihydrogène qui circule dans les portions intermédiaires 176c se réchauffe. La première portion 176a et la deuxième portion 176b sont disposées à l'extérieur de la tuyère d'éjection 174.

Les différentes premières extrémités 182a sont ainsi toutes fluidiquement connectées à la première portion 176a et les différentes deuxièmes extrémités 182b sont ainsi toutes fluidiquement connectées à la deuxième portion 176b.

Cette division en plusieurs portions intermédiaires 176c permet de diviser la canalisation d'apport 176 en plusieurs parties et ainsi de répartir le dihydrogène dans ces portions intermédiaires 176c au lieu d'avoir une unique portion plus longue à l'intérieur de la tuyère d'éjection 174. Un tel arrangement permet entre autres de limiter les efforts qui s'exercent sur chaque portion intermédiaire 176c par rapport aux efforts qui s'exerceraient sur une portion plus longue.

La jonction entre les premières extrémités 182a et la première portion 176a est effectuée par exemple à travers un collecteur amont 201 et la jonction entre les deuxièmes extrémités 182b et la deuxième portion 176b est effectuée par exemple à travers un collecteur aval 202.

Pour limiter au mieux les efforts qui s'exercent sur les portions intermédiaires 176c tout en maximisant la surface d'échange thermique, différentes portions intermédiaires 176c sont réparties sur le pourtour de la tuyère d'éjection 174.

La tuyère d'éjection 174 présente un axe longitudinal X' qui selon l'arrangement de la paroi de tuyère 180 peut être parallèle ou non à l'axe longitudinal X du système de propulsion 150. Chaque portion intermédiaire 176c s'étend ainsi sur un secteur angulaire autour de l'axe longitudinal X' de la tuyère d'éjection 174. Selon un mode de réalisation particulier, chaque portion intermédiaire 176c s'étend sur un angle compris entre 40° et 50° et il y a au moins quatre portions intermédiaires 176c réparties sur le pourtour.

De la même manière, il est possible de répartir le dihydrogène sur la longueur de la tuyère d'éjection 174. Selon un mode de réalisation particulier, il y a plusieurs portions intermédiaires 176c qui sont disposées les unes à la suite des autres le long de l'axe longitudinal X' de la tuyère d'éjection 174. Sur la Fig. 2, il y a quatre portions intermédiaires 176c à la suite.

Pour assurer que le transfert thermique soit le plus efficient possible entre les différentes portions intermédiaires 176c qui sont disposées les unes à la suite des autres, ces portions intermédiaires 176c sont distantes les unes des autres. Ainsi un espace est présent entre deux portions intermédiaires 176c successives, ce qui permet aux gaz de combustion de circuler entre les portions intermédiaires 176c.

En outre, pour des raisons de sécurité, et comme cela est représenté à la Fig. 4, il est prévu que la canalisation d'apport 176, c'est-à-dire la première portion 176a, la deuxième portion 176b et chaque portion intermédiaire 176c, est une canalisation à double peau avec une peau intérieure 402 délimitant un volume intérieur 404 dans laquelle circule le dihydrogène et une peau extérieure 406 qui est autour de la peau intérieure 402 et où est délimité entre la peau intérieure 402 et la peau extérieure 406, un volume extérieur 408 ne contentant pas de dihydrogène en condition normale de fonctionnement, c'est-à-dire sans fuite.

Ainsi, même en cas de fuite au niveau de la peau intérieure 402, le dihydrogène va se répandre dans le volume extérieur 408 en restant isolé des gaz chauds de combustion.

Le volume extérieur est préférentiellement mis au vide, ainsi en cas de fuite au niveau de la peau extérieure 406, le volume extérieur 408 va se remplir de gaz chauds de combustion tout en restant isolé du dihydrogène.

Pour prévenir une fuite de dihydrogène au niveau des portions intermédiaires 176c, le système d'échangeur thermique 200 peut comporter des moyens de détection de fuite et une unité de contrôle connectée aux moyens de détection de fuite. Le système d'échangeur thermique 200 comporte également une vanne montée sur la première portion 176a et commandée en ouverture et en fermeture par l'unité de contrôle. L'unité de contrôle commande la fermeture de la vanne lorsque les moyens de détection de fuite détectent une fuite de dihydrogène au niveau de la peau intérieure 402 ou de la peau extérieure 406 des portions intermédiaires 176c.

Les moyens de détection de fuite sont par exemple des capteurs de pression disposés dans le volume extérieur 408 et comme la pression dans le volume extérieur 408 est différente de la pression de dihydrogène dans le volume intérieur 404 et de la pression de l'atmosphère extérieur aux portions intermédiaires 176c, une fuite de la peau intérieure 402 ou de la peau extérieure 406 sera détectée par les capteurs de pression du fait du changement de la pression dans le volume extérieur 408.

Lorsque le volume extérieur est mis au vide, le volume extérieur est par exemple fluidiquement connecté à une pompe à vide 220.

Pour assurer un bon maintien de la peau extérieure 406 autour de la peau intérieure 402, la canalisation d'apport 176 comporte des entretoises 410 fixées entre la peau intérieure 402 et la peau extérieure 406 et donc dans le volume extérieur 408. Dans le mode de réalisation de l'invention présenté ici, chaque entretoise 410 s'étend radialement autour de la peau intérieure 402.

Pour avoir un meilleur échange thermique entre les gaz chauds de combustion et le dihydrogène, que la canalisation d'apport 176 soit à simple ou à double peau, la surface extérieure de la canalisation d'apport 176 est équipée d'ailettes 412 qui sont réalisées dans un matériau à forte conductivité thermique et solidaire de la surface extérieure. Les ailettes 412 sont ainsi plongées dans les gaz chauds de combustion.

## Revendications

1. Ensemble propulsif (151) pour un aéronef (100) comportant :
- un système de propulsion (150) comprenant un carénage (172), un ensemble rotatif (160) comportant une chambre de combustion (168) et logé dans le carénage (172), une tuyère d'éjection (174) disposée en aval de la chambre de combustion (168) et délimitée par une portion arrière du carénage (172), dite paroi de tuyère (180), et assurant l'éjection des gaz de combustion issus de la combustion du dihydrogène dans la chambre de combustion (168),
- un réservoir de dihydrogène (178), et
- une canalisation d'apport (176) qui relie le réservoir (178) à la chambre de combustion (168) et qui comporte une première portion (176a) qui s'étend entre le réservoir (178) et la paroi de tuyère (180), une deuxième portion (176b) qui s'étend entre la paroi de tuyère (180) et la chambre de combustion (168), et une pluralité de portions intermédiaires (176c) logées à l'intérieur de la tuyère d'éjection (174), où chacune comporte une première extrémité (182a) fluidiquement connectée à la première portion (176a) à travers la paroi de tuyère (180) et une deuxième extrémité (182b) fluidiquement connectée à la deuxième portion (176b) à travers la paroi de tuyère (180),
**caractérisé en ce que**
chaque portion intermédiaire (176c) s'étend sur un secteur angulaire autour d'un axe longitudinal (X') de la tuyère d'éjection (174).

2. Ensemble propulsif (151) selon la revendication 1, **caractérisé en ce qu'**il y a plusieurs portions intermédiaires (176c) les unes à la suite des autres le long de l'axe longitudinal (X') de la tuyère d'éjection (174).

3. Ensemble propulsif (151) selon la revendication 2, **caractérisé en ce que** les portions intermédiaires (176c) disposées les unes à la suite des autres, sont distantes les unes des autres.

4. Ensemble propulsif (151) selon l'une des revendications 1 à 3, **caractérisé en ce que** la canalisation d'apport (176) est une canalisation à double peau avec une peau intérieure (402) délimitant un volume intérieur (404) dans laquelle circule le dihydrogène et une peau extérieure (406) délimitant un volume extérieur (408).

5. Ensemble propulsif (151) selon la revendication 4, **caractérisé en ce que** le volume extérieur (408) est mis au vide.

6. Ensemble propulsif (151) selon l'une des revendications 4 ou 5, **caractérisé en ce que** la canalisation d'apport (176) comporte des entretoises (410) fixées entre la peau intérieure (402) et la peau extérieure (406).

7. Ensemble propulsif (151) selon l'une des revendications 1 à 6, **caractérisé en ce que** la surface extérieure de la canalisation d'apport (176) est équipée d'ailettes (412).

8. Aéronef (100) comportant au moins un ensemble propulsif (151) selon l'une des revendications précédentes.

## Patentansprüche

1. Antriebseinheit (151) für ein Luftfahrzeug (100), umfassend:
- ein Antriebssystem (150), aufweisend eine Verkleidung (172), eine rotierende Einheit (160), die eine Brennkammer (168) umfasst und in der Verkleidung (172) aufgenommen ist, eine Ausstoßdüse (174), die stromab der Brennkammer (168) angeordnet ist und durch einen hinteren Abschnitt der Verkleidung (172), Düsenwand (180) genannt, begrenzt wird und das Ausstoßen der aus der Verbrennung des Wasserstoffs in der Brennkammer (168) hervorgegangenen Verbrennungsgase gewährleistet,
- einen Wasserstofftank (178), und
- eine Zuführleitung (176), die den Tank (178) mit der Brennkammer (168) verbindet und die einen ersten Abschnitt (176a), der sich zwischen dem Tank (178) und der Düsenwand (180) erstreckt, einen zweiten Abschnitt (176b), der sich zwischen der Düsenwand (180) und der Brennkammer (168) erstreckt, und eine Mehrzahl von Zwischenabschnitten (176c), die im Inneren der Ausstoßdüse (174) aufgenommen sind, umfasst, wobei jeder ein erstes Ende (182a), das durch die Düsenwand (180) mit dem ersten Abschnitt (176a) fluidisch verbunden ist, und ein zweites Ende (182b), das durch die Düsenwand (180) mit dem zweiten Abschnitt (176b) fluidisch verbunden ist, aufweist, **dadurch gekennzeichnet, dass** sich jeder Zwischenabschnitt (176c) über einen Winkelsektor um eine Längsachse (X') der Ausstoßdüse (174) erstreckt.

2. Antriebseinheit (151) nach Anspruch 1, **dadurch gekennzeichnet, dass** entlang der Längsachse (X') der Ausstoßdüse (174) mehrere Zwischenabschnitte (176c) hintereinander angeordnet sind.

3. Antriebseinheit (151) nach Anspruch 2, **dadurch gekennzeichnet, dass** die hintereinander angeordneten Zwischenabschnitte (176c) voneinander beabstandet sind.

4. Antriebseinheit (151) nach einem der Ansprüche 1 bis 3, **dadurch gekennzeichnet, dass** die Zuführleitung (176) eine doppelhäutige Leitung ist mit einer Innenhaut (402), die ein Innenvolumen (404) begrenzt, in dem der Wasserstoff zirkuliert, und einer Außenhaut (406), die ein Außenvolumen (408) begrenzt.

5. Antriebseinheit (151) nach Anspruch 4, **dadurch gekennzeichnet, dass** das Außenvolumen (408) evakuiert ist.

6. Antriebseinheit (151) nach einem der Ansprüche 4 oder 5, **dadurch gekennzeichnet, dass** die Zuführleitung (176) Streben (410) umfasst, die zwischen der Innenhaut (402) und der Außenhaut (406) fixiert sind.

7. Antriebseinheit (151) nach einem der Ansprüche 1 bis 6, **dadurch gekennzeichnet, dass** die Außenfläche der Zuführleitung (176) mit Rippen (412) ausgestattet ist.

8. Luftfahrzeug (100), das mindestens eine Antriebseinheit (151) nach einem der vorhergehenden Ansprüche umfasst.

## Claims

1. Propulsion assembly (151) for an aircraft (100), having:
- a propulsion system (150) comprising a fairing (172), a rotary assembly (160) having a combustion chamber (168) and housed in the fairing (172), an exhaust nozzle (174) arranged downstream of the combustion chamber (168) and delimited by a rear portion of the fairing (172), referred to as nozzle wall (180), and ensuring the discharge of the combustion gases originating from the combustion of the dihydrogen in the combustion chamber (168),
- a dihydrogen tank (178), and
- a supply duct (176), which connects the tank (178) to the combustion chamber (168) and which has a first portion (176a), which extends between the tank (178) and the nozzle wall (180), a second portion (176b), which extends between the nozzle wall (180) and the combustion chamber (168), and a plurality of intermediate portions (176c) housed inside the exhaust nozzle (174),
wherein each portion has a first end (182a), which is fluidically connected to the first portion (176a) through the nozzle wall (180), and a second end (182b), which is fluidically connected to the second portion (176b) through the nozzle wall (180),
**characterized in that** each intermediate portion (176c) extends over an angular sector about a longitudinal axis (X') of the exhaust nozzle (174).

2. Propulsion assembly (151) according to Claim 1, **characterized in that** there are a plurality of intermediate portions (176c) in succession along the longitudinal axis (X') of the exhaust nozzle (174).

3. Propulsion assembly (151) according to Claim 2, **characterized in that** the intermediate portions (176c) arranged in succession are spaced apart from one another.

4. Propulsion assembly (151) according to one of Claims 1 to 3, **characterized in that** the supply duct (176) is a double-walled duct with an inner wall (402) delimiting an inner volume (404) in which the dihydrogen circulates and an outer wall (406) delimiting an outer volume (408).

5. Propulsion assembly (151) according to Claim 4, **characterized in that** the outer volume (408) is evacuated.

6. Propulsion assembly (151) according to either of Claims 4 or 5, **characterized in that** the supply duct (176) has spacers (410) fastened between the inner wall (402) and the outer wall (406).

7. Propulsion assembly (151) according to one of Claims 1 to 6, **characterized in that** the outer surface of the supply duct (176) is equipped with fins (412).

8. Aircraft (100) having at least one propulsion assembly (151) according to one of the preceding claims.
